# EUROPEAN PATENT SPECIFICATION

(11) **EP 0 408 606 B1**
(45) Date of publication and mention of the grant of the patent: **01.09.1993**
(21) Application number: 89903424.3
(22) Date of filing: 13.02.1989
(51) Int. Cl.: B01J 8/08, B01J 8/18, C10G 11/18

(54) **FLUID CATALYTIC CRACKING (FCC) CATALYST AND ADDITIVE LOADING AND CONTROL SYSTEM**
EINSPEISE- UND REGELSYSTEM FÜR FLIESSBETTCRACKKATALYSATOREN UND -ADDITIVE
CATALYSEUR DE CRAQUAGE CATALYTIQUE FLUIDE ET SYSTEME DE COMMANDE ET DE CHARGEMENT D'ADDITIFS

(30) Priority: 16.02.1988 US 156162
(43) Date of publication of application: 23.01.1991
(73) Proprietor: Bartholic, David B., Watchung New Jersey 07060 (US)
(72) Inventor: Bartholic, David B., Watchung New Jersey 07060 (US)
(74) Representative: Bibby, William Mark
(86) International application number: US8900601
(87) International publication number: WO8907487

(56) References cited:
- US-A- 3 294 675
- US-A- 3 770 615
- US-A- 3 850 582
- US-A- 4 018 671
- US-A- 4 051 019
- US-A- 4 274 942
- US-A- 4 395 325
- US-A- 4 552 203

## Description

### BACKGROUND OF THE INVENTION

### 1. Field of the Invention

This invention relates to methods and apparatus for control of catalysts additives used to correct side effects incurred in the fluid catalytic cracking of petroleum fractions caused by the imposition of peripheral requirements, variations in feedstocks, pollution considerations and product quality specifications in order to minimize proliferation of multiple additives and the resulting complexities associated with their regulation.

### 2. Description of the Prior Art.

The history of the petroleum industry and, consequently, of refining technology has been that of originally making use of a small part of the petroleum barrel, finding new uses for more and more of it, and eventually having to alter parts of it chemically in order to accommodate competing demands for the components of crude petroleum.

The first such alteration was accomplished by thermal decomposition ("cracking") in the early 1930's. This left much to be desired as it created many new problems. The most important step was the development of catalytic decomposition of ("cat cracking") gas oil in the presence of naturally occurring clays, kaolins, zeolites, etc., in an atmosphere of its own vapor. This accomplished major strides in the distribution and quality of the components of the "synthetic crude" thus produced. Research continues to this day in developing this process to its highest levels of effectiveness and flexibility.

A major innovation in the cat cracking process took place with the introduction of a "fluidized bed" which provides intimate contact between catalysts and reactants under uniform, precise operating conditions and duration i.e., space velocity, catalyst/oil ratios etc. and burning of the coke residue of the reaction in order to supply cracking heat for subsequent reaction and regeneration of the coked catalyst for re-use.

The terms "fluid", "fluidized", "fluidization" in the context of this disclosure refer to an unusual flow phenomenon which provides the distinct advantages mentioned above. This occurs as an intermediate behavior of particulate solids in "microspheroidal" granules i.e., those granules of spherical shape and of uniform size, essentially in the 10 to 120 micron range. In this context we will frequently use the expression micro-spheroidal ("MS") Fluid Catalytic Cracking ("FCC") catalyst.

A slow flow of rising gases upward through a bed of such particles will initially simply filter through the bed agitating the particles. As gas flow approaches the average terminal falling velocity of the particles, the bed expands upward, extended by the gas flow, the upper surface however remaining distinct and defining the upper limit of a "dense phase." A rapid inter-migratory motion of the particles is observed, - even waves appear on the surface; toy boats even will float on it. Thus "fluidized", further increase in gas flow will result in "slugging" i.e., large bubbles; and, finally, "blow-out" or transport of the particles.

In the context of this disclosure, a range of states of MS particles will occur in the various applications wherein air is used to maintain an easily moveable condition which varies from what might be termed "agitation" to increased relative air flow rates which provide the full effect of a fluidized dense bed and transport of the particles. Hereinafter, this entire transition range will be referred to by the terms "agitation" or "fluidization" and/or the combination term "agitation/fluidization".

In any event, in the fluidized state the most immediately apparent effect is that these tiny spheres - more than a million in a cubic inch (16.38 cm³) - migrate rapidly, bounce off each other, bump into walls, heat and cool almost instantaneously as they pass rapidly through the rising gases. Temperature in such a bed is normally so uniform that it is difficult to maintain a 0.006K (0.01^{o}F) difference from top to bottom of a bed 4.57 m (15 ft) deep. In the FCC process hot active catalyst, in the ratio of several pounds of catalyst per pound of oil, contact preheated cracking feedstock. Thereupon, catalyst heat and activity over a precisely controlled residence time promote a variety of selected decomposition reactions of the feedstock constituents. A deposit of coke on the catalyst is also a usual consequence of this catalytic activity. Thereafter the cold deactivated catalyst is withdrawn from the reaction section of the FCC unit and blown by preheated air into the unit regenerator section. There surface coke is burned off in another fluidized bed and the catalyst is thereby cleaned, re-activated, re-heated and recycled to return, as before, to the reaction section. Fine particles are handled in the regenerator as in the reactor.

The industry went on to diversify cracking processes to take place at changing conditions of temperature and pressure, atmospheres of different vapors, catalysts of vastly greater complexity in fixed beds, moving beds, and fluidized beds for such varied purposes as octane improvement, sulfur removal, isomerization, etc.

One material remains pervasive to the process, namely the basic catalyst consisting essentially of clays, special sands, and traces of metallic oxides. For reasons imperfectly understood, although still being researched, these materials e.g., complexes of alumina, aluminosilicate, silica, chromia, zirconia, gallium, germanium, etc. form crystalline lattices in a porous matrix, with distinguishable "active" or "acid", sites, which enter into the cracking reactions and have profound effects upon the efficacy and profitability of the cracking reactions. It is but a short step further to understand the concerted efforts of the industry to synthesize such catalysts whereby one could "tailor-make" the material specifically for the duty intended.

Catalysts currently under development for use in the petroleum refining industry are complex blends of ingredients which are mixed with a binder which, upon completion, forms a matrix holding the finished particle together without interfering appreciably with its chemical activity. These particles must however conform to the narrow range of particle size suited for fluidization. Alternatively, portions of special purpose MS additives may be mixed with the bulk of catalyst inventory in the processing unit in order to enhance and/or suppress certain specific chemical reactions.

Thus, the original basic FCC process has evolved in the last 40 years into a highly engineered and complex operation. As the oil refiners, "workhorse" for conversion of the heavier hydrocarbons in crude oil into gasoline. Thus cat crackers have evolved from units only capable of dealing with the original distillates and light gas oil (755 K (900^{°}F) end point) to units which are now capable of operation at more severe conditions and on heavier feedstocks containing substantial amounts of catalyst poisons such as metals, mainly nickel and vanadium, asphaltenes and other highly carbonaceous materials. This evolution also has necessitated changes from use of all carbon steel to use of alloys and the reemergence of catalyst coolers and external cyclones along with short contact time reactor systems and high temperature regeneration. At the same time the catalyst was evolving from their original sand forms to low alumina to high alumina to zeolytic catalyst in the late 60's and early 70's. These latter changes are continuing with modifications to the zeolyte forms in order to control the type and structure of these newer catalyst.

More recently, the industry has developed additives for addition to the FCC circulating catalyst inventory to correct problems associated with this evolution. The first of these additives was an oxidation promoter utilizing low levels of platinum on a MS particle to promote the combustion of CO to CO₂ in the FCC regenerator. These were originally developed in the early 70's. As refiners adapted their operations to complete the burning of the 2-10% carbon monoxide in the regenerator flue gas to CO₂, other problems were encountered. These problems were usually associated with poor air-carbon distribution in the regenerator and in some cases, low regenerator operating temperatures. In these cases, the operator of the FCC process would encounter afterburning, which is the burning of CO to CO₂, without a heat sink such as catalyst, so that the temperatures in the dilute phase of the regenerator, in individual cyclones, or in the flue gas system would exceed design and result in premature failure or shortened mechanical life. Another operating difficulty which often arises is an exceeding of the legal permissible limits for CO emission to the atmosphere. Wild fluctuations in the regenerated catalyst temperatures as the process varies in the degree of completion of complete CO combustion also takes place. The addition of an oxidation promoter at usually less than 10% of the fresh catalyst can often correct these problems and result in improved operations and economics.

Other problems associated with this evolution are increased SOx emissions in the regenerator flue gas as a result from the use of higher sulfur FCC feedstocks, decrease in catalyst activity, increase in hydrogen and gas production, increased metals contamination resulting from the use of heavier feedstocks, the need for higher octane FCC gasoline and increasing quantities of bottoms, the heaviest product produced from the FCC unit. All of these problems can be reduced or eliminated by the addition of specific additives.

Such additives can either be liquid or fluidizable solids. However, this patent disclosure will concern itself mainly with a control system and additive system for fluidizable solids since the addition of a liquid through a metering pump or other devices is well known to the art. The control system described in this discussion could however be used to control liquid addition.

Hitherto, the addition of these additives has been in a haphazard fashion and not at all cost effective. Either the catalyst supplier has added the additives to the primary catalyst after manufacture and before shipping or the additives have been purchased separately by the refiner and added batchwise. In the former case the catalyst suppliers' main business is producing and selling the cracking component. The additive addition creates production difficulties_{,} not to mention quality control problems. Also, in most cases, the catalyst supplier is forced to add much more of the additive than necessary since it is imperative that the material perform correctly in all cases.

Needless to say, this does not eliminate the changing performance of the bulk of catalyst as the activity of each of the additives declines at its own rate over a period of time and a quantity of feedstock throughput. With the frequent feedstock changes which most refiners experience plus the mechanical differences in the actual FCC units, which control to a great extent the necessary amount of each of the additives necessary, the catalyst supplier must overdose the catalyst with additive which, in effect, dilutes the active catalyst and raises its cost. The purposes of catalyst performance modification are better served by addition of such additives, separately, at the unit, according to their individual requirements.

Fresh catalyst addition, being 5 to 50 times the amount of the additives collectively, forms the bulk reference for additive performance, and is best added continuously. Many systems for continuous fresh catalyst addition have been tried with varying degrees of success. These systems have all been plagued with high maintenance costs because of mechanical or field instrument failures. The systems commonly employed have been "Star" type feeders, weigh pots, and pinch valves and an assortment of "home made" systems brought about by frustration with the normal systems. In any event, these methods were, if operating, controlled by the board operator as a cyclic system on a timer to add a given weight or volume of fresh catalyst.

For example, US-A-3,850,582 describes a fluid catalytic cracking unit in which catalyst additive is delivered to the cracking unit from a hopper via a slide valve. The slide valve is controlled by a timer which has a fixed, preset operating cycle and a vent valve is used to regulate the pressure in the hopper whereby to maintain a predetermined pressure drop across the slide valve.

Because of the problems associated with continuous fresh catalyst addition systems and the relatively small quantities of additives needed, continuous additive systems have not been employed. Indeed, heretofore there has been no known system for fresh catalyst addition or additive addition on closed loop FCC process variable control.

Presently, the tendency is to add much more of the additive than necessary so that the operator can get through his shift without problems. Therefore, since the typical system in use is a batch type blow pot, which requires a lot of operator attention, the addition is normally a frequent and severe distraction to the operator Since the additive life is finite, this normal procedure increases the refiners cost. By far the most economical and cost effective method of addition is on an "as needed" continuous basis with minimum operator involvement. With all the different additives necessary it could become a full time job for an operating crew to do nothing but add additives. The key to solving these problems would be a method of continuous, automatic delivery of additives to the bulk of active catalysts by a method responsive to a measurable decline in the function of the additive. By this means addition can take place frequently without waste, without manual intervention, and catering specifically to each of the particular problems requiring correction.

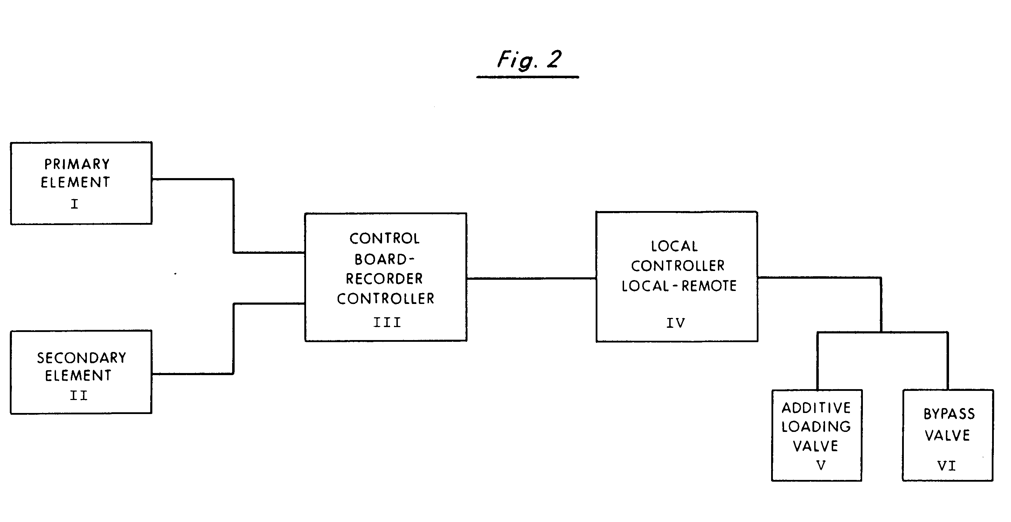

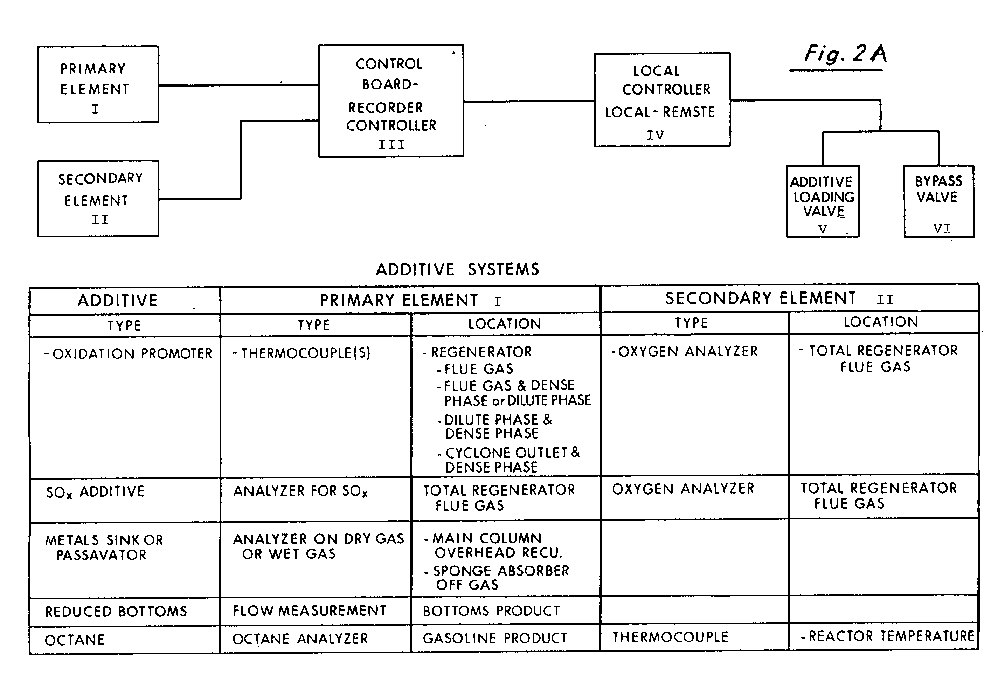

The invention is best considered in conjunction with the generalized closed loop control systems shown in Figure 2. The invention concerns a method for catalyst addition which is applicable to the addition of any fluidizable solid. Thus for example, the invention could be used to introduce fresh bulk catalyst, active and non-catalytic catalyst components, as well as catalyst additives. The addition can be continuous on FCC process variable control, controlled automatically from the control room, or as a batch system when necessary. More specifically, the invention provides for loading and controlling piecewise continuous addition of a catalyst such as an MS-FCC additive or bulk catalyst to affect a specific bulk FCC catalyst performance parameter.

According to the invention, there is provided a method for controlling introduction of a fluid catalytic cracking catalyst additive into a fluid catalytic cracking unit (FCC unit) in order to maintain a desired amount of the cracking catalyst additive relative to a given amount of bulk catalyst circulating in the FCC unit and thereby controlling a catalyst performance parameter of the FCC unit and wherein said method further comprises:
(1) determining a desired amount of cracking catalyst additive relative to a given amount of bulk catalyst which is needed to maintain the catalyst performance parameter of the FCC unit at a desired level;
(2) determining a range of cracking catalyst additive concentrations relative to a given amount of bulk catalyst which is required to maintain the catalyst performance parameter of the FCC unit at the desired level;
(3) determining an approximate consumption rate of the cracking catalyst additive over a given period of time;
(4) determining a basic cycle time period which is such that the given period of time over which the approximate consumption rate is determined is comprised of multiple basic cycle time periods and wherein each basic cycle time period further constitutes a period of time during which a maximum requirement of cracking catalyst additive is introduced into the FCC unit;
(5) determining a maximum requirement of cracking catalyst additive to be introduced into the FCC unit in a given basic cycle time period;
(6) introducing a maximum requirement of the cracking catalyst additive into the FCC unit in a given basic time period and introducing said maximum requirement of the cracking catalyst additives frequently enough over the given period of time such that: (a) the desired level of cracking catalyst additive relative to a given amount of bulk catalyst is achieved intermittently, on a periodic basis and (b) any given desired level of the cracking catalyst additive relative to the bulk catalyst remains within the range of cracking catalyst additive concentrations required to maintain the performance parameter of the FCC unit at the desired level;
(7) introducing any given maximum requirement of the cracking catalyst additive in any given basic cycle time period at a rate higher than the approximate consumption rate and in a time period which is no more than about two-thirds of the basic cycle time period; and
(8) transferring a given maximum requirement of cracking catalyst additive from a cracking catalyst inventory hopper to the FCC unit via an automatic addition valve, wherein the automatic addition valve comprises an addition valve and a purge valve which operate in a flip-flop fashion, such that when the addition valve is open (and the purge valve is closed), a fluidized phase of cracking catalyst additive is delivered to the FCC unit and such that when the purge valve is open (and the addition valve is closed) the hopper inventory is maintained in an agitated fluidized state, and operation of the automatic addition valve is based on a feedback signal which is provided by detection of said catalyst performance parameter of the FCC unit.

In a preferred embodiment the flip-flop can be overridden. This involves providing secondary override of the flip-flop addition interval according to a second selected criterion related to an ultimate performance parameter to be satisfied in order that time fluctuation of bulk catalyst performance with respect to the corrective/control function of the particular additive is maintained at an acceptably low level while overall performance with respect to this function is under process control. Thus for example, flue gas composition, as determined by analysis can be employed as secondary override of the flip-flop addition interval. Analysis of the flue gas composition for gases such as oxygen and/or carbon monoxide would be preferred techniques of instituting such a secondary override. Determination of flue gas and/or reactor temperatures, as well as determination(s) of temperatures at other points in the process e.g., the temperatures of the dense phase, the dilute phase, as well as determinations of temperature differentials between all of the above process points (e.g., flue gas temperature vs. dense phase temperature, dense phase vs. dilute phase temperatures etc.) and/or analysis of temperatures (and/or temperature differentials) in conjunction with flue gas compositions are all contemplated as being within the secondary override considerations taught by this patent disclosure.

Other process conditions can also be provided to generate various feedback control signals by instruments and procedures known to this art. Thus for example, stabilized FCC gasoline octane rating and reaction temperature could be provided as control signals (with either condition taking precedence) for the flip-flop timing interval. Still further variations on this control then might include: (1) measurement of octane rating as a function of total wet gas content of the reactor's effluent, particularly after rectification and condensation, (2) measurement of octane rating as a function of total dry gas flow rate, particularly after absorption and fractionation of the wet gas stream, (3) measurement of octane rating of a gasoline product by process chromatographic analysis of reaction gas production and (4) measurement of octane rating by LPG or propane composition.

In one application of the invention, the method controls carbon monoxide emissions into the FCC unit and in another application of the invention the method controls oxidation levels and hence carbon monoxide emissions into the FCC.

In these applications a secondary override function of flue gas composition, as determined by CO and/or O₂ analysis, also can well be incorporated into the system. This method specifically contemplates for complete CO combustion (500ppm) O₂ analysis by continuous on stream analytical instrumentation in the flue gas stream. In those cases where incomplete CO combustion may be desirable then only CO analysis by continuous on stream analytical instrumentation in the flue gas stream is contemplated.

In a further application of the invention the method controls SOₓ emissions into the FCC unit.

This method also specifically contemplates as a secondary override, O₂ and SOₓ analysis by continuous, on-stream analytical instrumentation in the flue gas stream.

In a yet further application the method controls catalyst poisoning into a FCC unit.

As a possible secondary override for security purposes reactor temperature, measured by thermocouple(s), located at convenient point(s) can be employed. This method specifically contemplates (a) reaction gas make measurement via the total wet gas content of the reactor effluent after rectification and condensation, (b) reaction gas make measurement via the total dry gas flow rate after absorption and fractionation of the wet gas stream and (c) reaction gas make measurement by process chromatographic analysis of the reaction gas production.

In another application of the invention, the method controls production of bottoms product.

Herein again, as in a metals passivator controller, reactor temperature measured by thermocouple is a wise precaution to take as a secondary override. Indeed the same instrument may serve both purposes.

In another application of the invention the method controls the octane levels of gasoline production.

This method specifically contemplates overriding secondary control of the flip-flop addition interval by a feedback signal of the reaction temperature. Indeed, since both are vital functions, it is a matter of choice as to the selection in the primary and secondary roles.

In another application of the invention, the method controls a product yield into the FCC unit, and in a yet further application of the invention the method controls gas make into the FCC unit.

In another embodiment of the invention the method controls coke laydown into the FCC unit and in a yet further application of the invention, the method controls the distribution of products into the FCC unit.

This multiple addition method also contemplates providing, where required, a secondary override of the flip-flop addition interval for each additive according to a second selected criterion related to an ultimate performance parameter to be satisfied in order that time fluctuation of bulk catalyst performance with respect to the corrective/control function of each particular additive is maintained at an acceptably low level, overall performance with respect to this function is under process control and mutual interactions between additive effects are damped and compensated by the feedback systems selected and implemented.

The invention is now described, by way of example only, by reference to the accompanying drawings in which:
Figure 1 is a flow diagram of a preferred embodiment of the additive systems contemplated by this patent disclosure; and
Figures 2, 2A and 3 are conceptual block diagrams for the various elements and interrelationships of instrument control loops as applied to the several additive control functions cited.

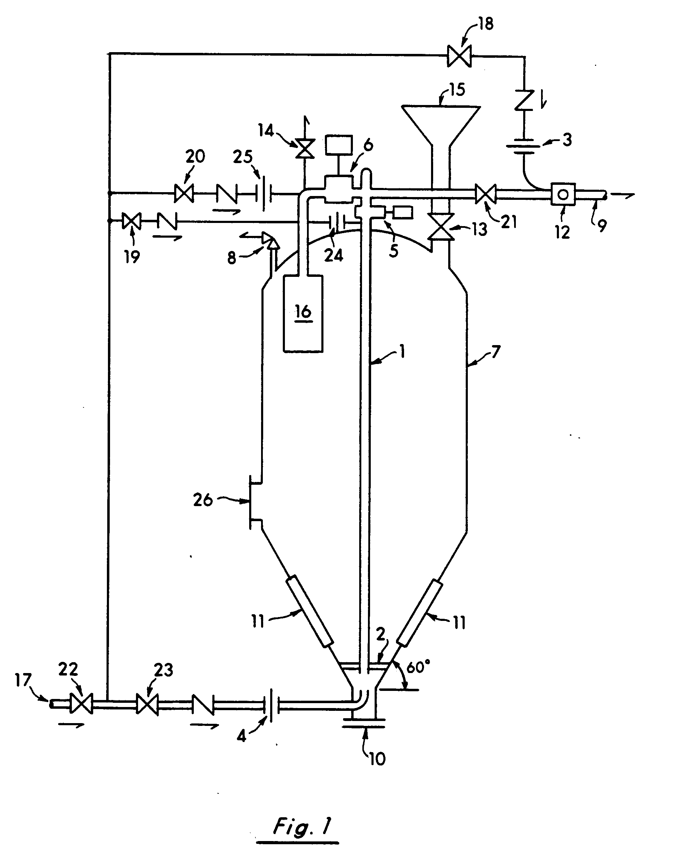

Figure 1 is a flow diagram of the generalized apparatus and methods of this patent disclosure. It emphasizes that there need be only two remotely operated valves, that can be automated as desired. This means, in effect, that this system has only two moving parts in the field which require maintenance. Moreover, the disclosed system can be designed with one multi-ported valve and one actuator to simplify the system even further.

The intention of the apparatus and method depicted in Figure 1 is to provide, in lieu of a truly continuous addition system with provision to vary the instantaneous rate of additive addition to the system, an apparatus which accomplishes, to all intents and purposes, the equivalent task of addition over time by varying the duration of addition at a precise constant higher rate such that the same overall rate is achieved intermittently, but on a periodic basis, but frequently enough to preclude significant variation in the performance of the bulk mass of active catalyst with respect to the effect the additive is intended to control. This pattern of addition, being essentially at constant overall rate, can be termed "piecewise continuous". It will be noted that a wide latitude effecting the amount of addition is accomplished by controlling the addition interval rather than actual addition rate.

The shape and size of the hopper 7 is not critical, however, it preferably should contain a conical section(s) between the top and the bottom. The conical section sides should however be at a greater angle than the angle of repose of the fluidizable solid so that the material flows easily into this section. In this case the angle shown in 60 degrees. The other important pieces of equipment are the removable internal lift tube 1 and its internal diameter and position in the hopper 7 as set by position brackets 2, restriction orifices or rotameter flow controllers (AFC), 3, 25 and 4, and control valves e.g., 5 (addition) and 6 (bypass). These valves are preferably incorporated into one three-way ball valve but could be gate, slide, or pinch valves. A few words are in order here to clarify the action of a "restriction orifice". Without going into unnecessary detail, a common, inexpensive device for flow measurement is an "orifice plate" a flat plate, with a sharp edged hole drilled concentrically, placed perpendicularly to the flow in a circular conduit. It creates a temporary pressure loss as velocity is increased to accommodate flow through the hole. This pressure is mostly received downstream when the flow patter again occupies the pipe cross-section.

When the flow through the orifice approaches sonic velocity, flow lines converge to a theoretical point the "vena contracta" just past the plate and the permanent pressure drop incurred is approximately 50% of the upstream pressure. This behavior can be usefully employed to limit the maximum flow in a conduit to a prearranged amount, as all attempts to increase this flow by increasing pressure have only slight effect. (See generally Spink, L.K., "Principles and Practice of Flowmeter Engineering", pp. 360-364, Eighth Edition, the Foxboro Company, Foxboro, Mass., 1958).

Probably the best way to describe the disclosed system is to discuss its operating sequence. This discussion is not intended to limit the system in any way but only to describe a probable operating sequence and the use of each piece of equipment. Typically the addition hopper 7 will be designed to hold a 30 day supply of fluidizable solid two thirds full. This of course can be varied as desired. It will also be designed for the operating conditions with a relief system 8 to protect from overpressure. A typical fresh catalyst loading line into the regenerator would be a 5.08 cm (2") extra heavy pipe and the addition of this fluidizable solid will normally be into this same line 9. It can, of course, be added separately to the regenerator or to the reactor or any other place desired such as the feed, as long as the proper fluidizing/conveying media is used. The bottom of hopper 7 contains a blind flange 10, which is usually 5.08 cm (2") or 10.16 cm (4") and can be valved with a gate valve, if desired, as a cleanout and inspection port. It is preferred that the conical section of the hopper 7 contains two sight ports 11 placed 180 degrees apart and close to the bottom of hopper 7 for verification of material levels in hopper 7. A helpful addition to loading line 9 is a see-through "bullseye" 12 for verifying additive flow into the unit. Depending on the size of hopper 7, an inspection port or manway 26 may be installed in said hopper.

The fluidizable material is added to hopper 7 through gate valve 13 once vent valve 14 is opened. Both valves are gate valves and normally around 10.16 cm (4"). All valves in contact with the fluidizable solid will be gate valves and may have packing/stem anbd seat ring purges if desired. The material added to hopper 7 through valve 13 may be pressured/blown into the hopper from rail cars, trucks, or other systems or, as shown, added through fill hopper 15 from sacks, boxes, or drums. For materials which are fluidized/blown into the hopper 7, vent valve 14 line can be connected to a vacuum system to help convey the material into the hopper instead of vented to the atmosphere as shown. If vent line 14 is connected to a proper filter 16 the effluent will not need to be treated for dust emissions. Fill hopper 15 is sized to have over 5 times the cross-sectional area of fill line 13 to aid in derating the material as it is added. It is also possible to replace fill hopper 15 with a flange and flexible pipe for gravity loading from specially designed additive shipping containers.

Once the hopper is inventoried, vent valve 14 and fill valve 13 are shut. The dry loading air 17, which is used to convey the fluidizable solid into the process, is lined up with valves 18, 19, 20, 21, 22, and 23 shut and valve actuators 5 and 6 actuated either locally or from the control board on manual to shut valve 5 and open valve 6. The loading air 17 main block valve 22 is opened as is valve 18 to allow air to flow through the check valve and rotameter flow controller 3 to pressure line 9, which is then commissioned to allow air to flow into the regenerator. Valve 21 is then opened slowly to pressure hopper 7 to operating pressure and then valves 19, 20 and 23 are opened to purge the internal lift tube 1 and outlet filter 16 and to commission the fluidizing/conveying media to the bottom of hopper 7. A rotameter flow controller 25 can be sized to backflush the outlet filter 16 when valve 6 is closed and rotameter flow controller 24 can be sized to keep the internal lift tube 1 purged and opened when loading valve 5 is closed. Rotameter flow controller (AFC) 4 is sized to supply the necessary fluidizing media for the size of lift tube 1 and the quantity of material to be delivered. The total amount of fluidizing media supplied to the system must be at least that necessary to keep loading line 9 open so that the combined quantity of media through rotameter flow controllers 3 and 4 must result in a velocity of at least 1.83 ms⁻¹ (6 ft.s⁻¹) in line 9 for typical FCC material.

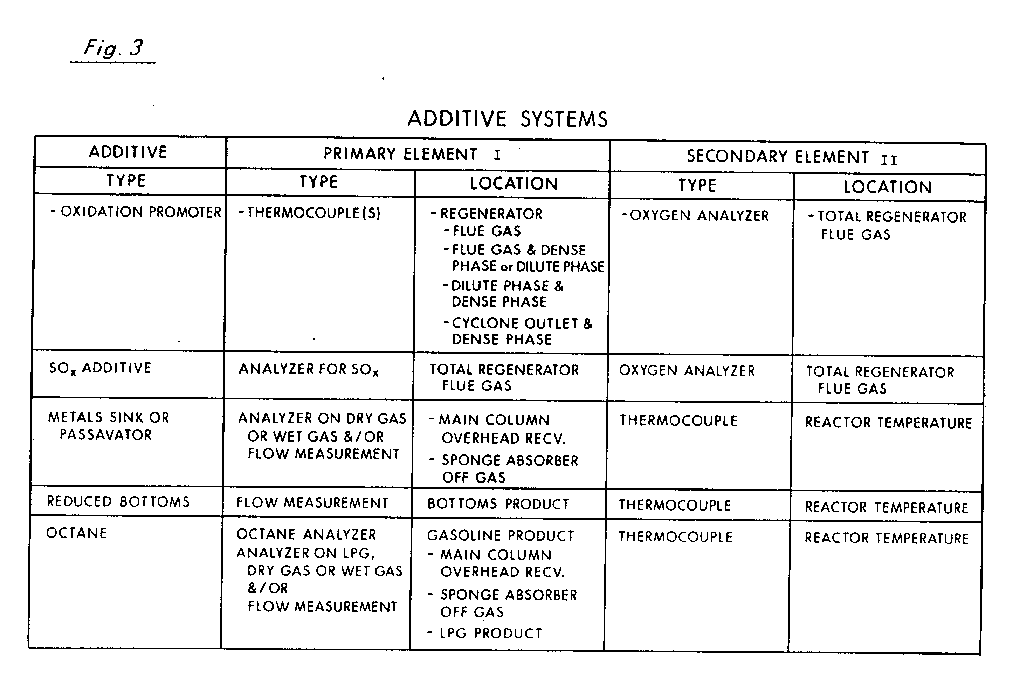

The system now has fluidizing media flowing into the bottom of hopper 7 through AFC 4 and combining with media flowing down lift tube 1 from AFC 24 to agitate and aerate, but not fluidize, the material in hopper 7 and exit through filter 16 and and control valve 6 to loading line 9, where it combines with the other media from AFC 3 and AFC 25. The system is now ready for operation, preferably by a control system depicted in Figures 2 and 3. After lining up the controller, the control system is actuated from the control board on either automatic or manual to start the loading sequence. Control valves 5 and 6 are set so that as one opens the other closes so that at no time is flow into the process shut off. As the system is actuated valve 6 will start to close while valve 5 opens, diverting the fluidizing media up lift tube 1 and fluidizing the material up the tube for addition to the process. The internal diameter of lift tube 1 is selected along with the quantity of fluidizing media supplied through AFC 4 and AFC 25 to give the desired range for material addition so that a minimum velocity of 0.15 ms⁻¹ (0.5 ft.s⁻¹) is maintained in lift tube 1 during loading. The variable for the quantity of material is the length of time valve 5 remains open. If the time is too short, like once per day, then lift tube 1 can be removed and replaced with a smaller internal diameter tube and AFC's 3 and 4 resized and replaced for the new rate desired. If the time valve 5 is open too long, the internal diameter of lift tube 1 would be increased as would AFC 4, and AFC 3 would be decreased. On large diameter hoppers an equalizing line complete with gate valve and check valve may be installed to allow flow and pressure equalization between the top and bottom of hopper 7. This line would be installed to permit flow from downstream of AFC 25 to downstream of AFC 4 during the additive addition cycle.

As discussed previously, a sized lift tube 1 in hopper 7 does not need to be installed in the vertical position. The sized lift tube can be installed at any angle and does not necessarily need to exit the hopper 7 at the top of the hopper. As the sized lift pipe pressure drop increases, the length of the lift pipe can be reduced (shortened) or the angle of the lift pipe can be installed to aid the flow of MS material out of the hopper. In all cases, the starting point (opening) of the lift pipe will be near the bottom of the hopper 7.

### ADDITIVE SYSTEM

Each of the variables under control will determine the optimum cycle time. As an example, the results of the addition of oxidation and SOₓ additives is almost immediate so that 1 to 6 cycles per hour might be considered optimum. On the other hand, gasoline octane, if one could obtain an on stream analyzer for this variable, would take about 4 hours to see a change after additive addition. Therefore, an optimum cycle time might be once every 4 to 6 hours. If the octane analysis is an engine test in the laboratory then one cycle per 8 to 10 hours might be optimum. The other variables under control would more than likely fall between these two extremes.

In Figure 3 the primary element (I) will be considered the primary process variable under control and the secondary element (II) is essentially an override or a process variable which must be maintained for optimum use of the additive. Both of these must have process variable sensors located in the process unit to sense the variable under control. The rest of the elements (the main control board recorder/indicator/controller (III), the local/remote system (IV) and the additive loading (V) bypass (VI) valves) are standard to all additive systems.

In normal operations the additive hopper would be commissioned as previously discussed. It is pressured up and full of additive and ready for operation. All the elements in the control system as shown in Figures 2 and 3 have been calibrated and are ready for operation. The unit is lined out and additive has been added to the process to obtain the desired primary element (I) and the level of the secondary element (II) for override and/or alarm has been determined. The initial additive addition to obtain the desired level of additive in the FCC inventory might be as much as 100 times the daily amount required. Therefore, this initial addition may require a separate larger high volume "blow-pot" type addition system or a 2.54 cm (1") to 5.08 cm (2") high volume bypass system complete with the separate aeration around lift tube 1 shown in Figure 1. The operator then places both the primary element (I) and secondary element (II) on the control board (III) system on automatic. As the primary element (I) process variable deviates from the control point indicating a need for the additive, the control board controller (III) will respond by sending out a signal through the locally mounted controller (IV), which is in the remote signal position allowing the signal to pass through the system, to open additive control valve (V) and close bypass valve (VI). Additive is added to the process to control the primary element (I) process variable at the desired level. When the process variable is at the desired level the board controller (III) reverses the signal and the additive loading valve (V) closes as the bypass valve (VI) opens. This all assumes the secondary element (II) process variable is satisfied. If it is not, the additive board controller (III) will not function until the secondary element (II) process variable is satisifed. Local controller (IV) is placed in the local mode of operation whenever it is necessary to field check the operation or when it is necessary to work on the hopper system or load the system with fresh material.

As discussed previously, the response time for the different additive varies greatly. For this reason, the addition of a timing/cycle system as part of board controller (III) or as the main control element might be considered. In this latter case, primary element (I) and secondary element (II) become indicators/recorders used by the operator to manually reset the cycle timer. In either case the timing or cycle elements function would be to cycle the additive addition on a predetermined cycle to compensate for the lag time. As an example one might set the cycle element to start the addition of the additive once it was activated by board controller (III) and add for a predetermined amount of time based on the known addition capabilities of the hopper system and then shut down (bypass) for a predetermined amount of time based upon the lag time expected. If after this period (cycle) the process variable was not under control, the cycle would repeat itself until such time as the variable was under control. At this point the board controller (III) would send a signal that would not activate the timer and wait for the variable to deviate from the desired point.

### OXIDATION PROMOTER ADDITIVE SYSTEM

In the case of an oxidation promoter to control carbon monoxide emissions in the flue gas, the preferred primary sensor would be a thermocouple or temperature sensor located in the process unit. Because of differences in design of FCC units, this control variable could be either the flue gas temperature, the temperature difference between the flue gas and dilute or dense phase of the regenerator, the temperature difference between the dilute and dense phases of the regenerator, or an individual cyclone outlet and the dense or dilute phases of the regenerator. For proper control it is desirable to maintain a minimum oxygen content in the flue gas at greater than 0.2 v% and normally around 0.5 v% to 2 v%. Higher than 2 v% is normally considered non-economical and also tends to increase the SOₓ emissions. The design of the FCC regenerator will dictate the optimum oxygen content of the flue gas. Units with poor catalyst carbon-air distribution will require more excess air than those with good air-carbon distribution. For this reason the secondary element is an oxygen analyzer located in the flue gas line. This oxygen analyzer could be used to control the total air (oxygen) rate to the regenerator and reset the blower to control this rate, but in this case it would be used to override or be an alarm system to alert the operator that there was not enough oxygen in the flue gas for proper operation of the oxidation promoter. One could, of course, use as the primary element (I) a carbon monoxide analyzer in the flue gas line but this is not considered as reliable or as cost effective as the preferred thermocouple system. Another variation of this control system would be to use an additional override on the additive system on low regenerator dense bed temperatures. This would only be considered on regenerator operations that normally operate below 921 K (1200^{°}F). At 866 K (1100^{°}F) to 894 K (1150°F) the oxidation promoter effectiveness would be considered marginal.

### SOₓ ADDITIVE SYSTEM

In the case of SOₓ additive to control the SOₓ emissions in the regenerator flue gas from the FCC unit, the preferred primary element (I) would be a SOₓ analyzer located in the total regenerator flue gas. While this additive is effective to some extent in non-oxidizing atmospheres, it is optimized and most effective when the oxygen content is greater than 0.1 volume% and more preferred at 0.5v% and still more preferred at greater than 1.0v%. For this reason the preferred control system has an oxygen analyzer in the total regenerator flue gas as the secondary element (II). The same comments regarding this oxygen analyzer and the one discussed under the oxidation promoter additive system are valid. In fact, most SOₓ additives also have some oxidizing capabilities and therefore the amount of excess oxygen necessary for optimum operation will decrease if the SOₓ additive is used in combination with an oxidation promoter. Note that in all these additive control cases, the secondary elements (II) discussed is the preferred case. However, the systems will still perform using only the primary element (I).

### METALS SINK OR PASSIVATOR ADDITIVE SYSTEM

The metals poisoning of FCC catalyst is mainly from nickel and vanadium that enters the system as feed contaminates. Nickel poisoning of the catalyst usually results in higher gas yields and much higher hydrogen yields. Vanadium poisoning of the catalyst will also result in the same effects as nickel poisoning but to a much less extent (10 to 40%). The main effect of vanadium poisoning is in catalyst deactivation if the regenerator is operated at high temperatures (>1005K (1350^{°}F)) and in an oxidizing atmosphere. Therefore, there are several additives in use for metals poisoning. One commonly used for nickel is antimony and it can be injected as a liquid. Also there are metal sinks which tie up the metals as non-active components and are usually added as a fluidizable solid. In any case, the control system described can be used on either system as previously discussed.

To control the gas made by additive addition, it is necessary to have as the primary element (I) an analyzer on either the wet gas or the dry gas. The wet gas from the main column overhead receiver is preferred as the lag time is considerably less than an hour compared to several hours on the dry gas from the secondary absorber. The preferred analyser is a gas chromatograph which will analyze for hydrogen and methane so that one can control the hydrogen to methane ratio to the desired value with additive addition. As a rough analyzer, a specific gravity analyzer could be used for control. The total dry gas made can also be used as the primary element (I) but it is not as exact as the analyser system but is a much more reliable and simpler than the analyzer. It does, however, need to be adjusted as refinery laboratory data becomes available on the gas streams as well as the feedstock. In these cases, a secondary element of reactor temperature is desirable.

The matter of catalyst activity is a more difficult variable to control as it depends upon fresh catalyst addition as well as the level of vanadium poisoning. However, it is necessary to understand that the hopper system described previously can also be used for adding fresh catalyst continuously by adding the components of the addition system described to the existing catalyst storage hoppers. The best method of determining the equilibrium catalyst activity in the FCC unit is to measure the activity on a laboratory test unit. One can use a MAT unit, which is the accepted industry practice, or for a known catalyst one can use surface area or zeolyte content almost as effectively. However, all of these take too much time to be effective for daily control. Therefore, one must use the unit itself as the analyser. If the feedstock does not change or if the operator is familiar with the feedstock, the conversion level at a set reactor temperature is the best indication of catalyst activity. Therefore, if one controls the continuous fresh catalyst addition at a set amount on a known feedstock and at a constant reactor temperature, measurement of the fresh feed rate, and total cycle oil rate will allow for calculation of volume % conversion as the primary element for metals sink additive control. Another method is to use a continuous metals analyzer on the feed plus the feed rate to calculate a total metals input or a total vanadium input as the primary element (1) and then add the additive on a predetermined ratio of weight of additive per weight of specified metal.

### REDUCED BOTTOMS ADDITIVE SYSTEM

This additive addition is very straight forward. The primary element (I) would be the total bottoms product and the additive added to maintain this at the desired level. Again reactor temperature, feedstock quality and quantity, fractionation, and catalyst activity all effect the bottoms yield and could be added into a very sophisticated control system, if desired. Otherwise the operator would need to adjust the control system addition cycle as data on these variables becomes available.

### OCTANE ADDITIVE SYSTEM

The octane additive needs to be controlled on the octane of the FCC gasoline product so the preferred primary element (I) is an octane analyzer on the product. Since the octane is affected to a great extent by reactor temperature, this can be used as a secondary element, if desired. Feedstock quality, fractionation, and catalyst activity all affect octane and need to be considered in operating the control system. The normal consequence of adding an octane additive is an increase in gas make and olefinicity of the gas as well as the LPG. Therefore, the octane additive can be added in response to the total gas make and/or the composition of the LPG or gas make. Perhaps the most efficient means for measuring the octane rating of a gasoline product is by process chromatographic analysis of the gasoline product.

### GENERAL ADDITIVE CONTROL SYSTEMS

There are several generalized additive control systems that can also be considered. These are all based on continuous additive addition and a cyclic system as discussed previously. In these systems the main control is a cyclic timer rate which would be set to add a specific weight of additive over a specified time period. Since all of the additive through addition devices as detailed in Figure 1 and discussed previously may be of differing sizes and use additives of differing properties, the systems will need to be calibrated to add a specified weight of additive through addition valve (5). This is easily accomplished with one signal since the valve actions will be opposite for the two valves 5 and 6. After adding for the specified time, the timer would send a signal to the two valves to reverse their positions and bypass the addition cycle for a specified period of time. The timer would then reset itself and repeat the cycle. The unit operator would then reset the cyclic timer or the addition/bypass sequence as data from unit operations became available. Typically the cyclic timer could be set up to add as a percentage of fresh catalyst addition or as a predetermined weight based upon past experience.

As an example of this operation, assume the addition of an oxidation promoter at 10.9 kg (24 lbs) per day from an additive addition system that has an inventory of about 453.6 kg (1000 lbs). The calibration of the additive addition system, based upon the lift tube 1 (Figure 1), and AFC's 3 and 4, supplied with the system for the specified dry loading air pressure in the refinery, indicates that the system is capable of delivering a maximum rate of 1.8 kg (4 lbs) per hour. This is four times the desired rate. Therefore, the addition cycle must be on only one third the time the system is bypassed or in the addition cycle for 15 minutes per hour. In this case the cycle timer would be set for a five minute addition period every twenty minutes. If this proved effective for control, the operator could decrease the addition rate by changing the addition cycle to four minutes in twenty, or if he wished to make less of a change, he could change the bypass period to 16 minutes and leave the addition cycle at 5 minutes, so that the system is now reset to an addition rate of 5 minutes in 21 minutes. Adjustment of the cyclic timer allows the operator to optimize the addition rate for unit conditions. If the control system also has a primary element (I) installed, as discussed previously, the operator can place this element in the control system as the reset mode for the timer. In this case the addition time always remains constant, at say the original five minutes cyclic time, and the primary element (I) signal would be that which activates the addition cycle timer reset. Therefore, the bypass time will vary depending on the control variable.

For systems, such as those on fresh catalyst or octane additives, which have a much longer lag time than for oxidation or SOₓ additives, the same control methodology is valid. However, in these cases the control system must be set up to limit the maximum and minimum amount of additive or catalyst than can be added in a specified period of time, so that the quantity of the additive in the system does not deviate excessively from a normal amount. Stated another way, one is never so far off of the desired amount that the system cannot be brought back into balance in a reasonable period of time. One can accomplish this with the cyclic timer and the size of the lift tube (1) supplied with the additive system. Since the lift tube (1) is not as easily changes as the cyclic timer and must be sized for a wide range of additive/catalyst addition, the cyclic timer in all cases should be supplied with an override system which will limit the maximum and minimum bypass times for the control system. If one considers an octane additive with a lag time of 4 hours and a preferred addition rate of 10% plus 2% and -1% tolerance on the fresh catalyst addition rate of 12 tons per day then the cyclic timer would be set up to add 50% of the time. In other words, the timer would be set to add the octane additive for fifteen minutes and to bypass for fifteen minutes before repeating the cycle. Also, the timer overrides would be set to deliver a minimum of 9% of the fresh catalyst addition rate or 1.08 tons per day and a maximum of 12% of the fresh catalyst addition rate or 1.44 tons per day. This would require that the cyclic timer maximum override be set so that the 15 minute addition rate can be as high as 60% of the total cycle time or a total cycle time of 25 minutes (15 minutes addition and 10 minutes bypass). To satisfy the 1.08 tons per day minimum addition rate, the minimum cyclic timer override would be set so that the 15 minute addition rate is 45% of the total cycle time of 33.3 minutes (15 minutes addition and 18.3 minutes of bypass). Therefore, if the addition system was set up on closed loop control on octane, if the octane variable was below the set point valve, the primary element (I) signal to reset the additive addition rate could not add more than 1.44 tons per day of additive. Likewise, if the octane was above the set point, the additive addition rate could not be reduced to less than 1.08 tons per day.

Those skilled in the art will appreciate that while this invention generally has been described in terms of the general discussions, specific examples and preferred embodiments, none of these should be taken individually as a limitation upon the inventive concepts which are set forth in the following claims. For example, even though the methods and apparatus and examples discussed, e.g., additives to control oxidation, SOₓ emissions, catalyst metals poisoning, yield of reduced bottoms, octane, as well as multiple catalyst introductions (e.g., 2, 3, 4, etc.) of different additives, it will be appreciated that the herein disclosed system is applicable to many other additives and in any number of combinations. Moreover, the system can be used to introduce bulk catalyst as well as additives.

## Claims

1. A method for controlling introduction of a fluid catalytic cracking catalyst additive into a fluid catalytic cracking unit (FCC unit) in order to maintain a desired amount of the cracking catalyst additive relative to a given amount of bulk catalyst circulating in the FCC unit and thereby controlling a catalyst performance parameter of the FCC unit and wherein said method further comprises:
(1) determining a desired amount of cracking catalyst additive relative to a given amount of bulk catalyst which is needed to maintain the catalyst performance parameter of the FCC unit at a desired level;
(2) determining a range of cracking catalyst additive concentrations relative to a given amount of bulk catalyst which is required to maintain the catalyst performance parameter of the FCC unit at the desired level;
(3) determining an approximate consumption rate of the cracking catalyst additive over a given period of time;
(4) determining a basic cycle time period which is such that the given period of time over which the approximate consumption rate is determined is comprised of multiple basic cycle time periods and wherein each basic cycle time period further constitutes a period of time during which a maximum requirement of cracking catalyst additive is introduced into the FCC unit;
(5) determining a maximum requirement of cracking catalyst additive to be introduced into the FCC unit in a given basic cycle time period;
(6) introducing a maximum requirement of the cracking catalyst additive into the FCC unit in a given basic time period and introducing said maximum requirement of the cracking catalyst additives frequently enough over the given period of time such that: (a) the desired level of cracking catalyst additive relative to a given amount of bulk catalyst is achieved intermittently, on a periodic basis and (b) any given desired level of the cracking catalyst additive relative to the bulk catalyst remains within the range of cracking catalyst additive concentrations required to maintain the performance parameter of the FCC unit at the desired level;
(7) introducing any given maximum requirement of the cracking catalyst additive in any given basic cycle time period at a rate higher than the approximate consumption rate and in a time period which is no more than about two-thirds of the basic cycle time period; and
(8) transferring a given maximum requirement of cracking catalyst additive from a cracking catalyst inventory hopper to the FCC unit via an automatic addition valve, wherein the automatic addition valve comprises an addition valve and a purge valve which operate in a flip-flop fashion, such that when the addition valve is open (and the purge valve is closed), a fluidized phase of cracking catalyst additive is delivered to the FCC unit and such that when the purge valve is open (and the addition valve is closed) the hopper inventory is maintained in an agitated fluidized state, and operation of the automatic addition valve is based upon a feedback signal which is provided by detection of said catalyst performance parameter of the FCC unit.

2. A method as claimed in claim 1, wherein said operation of the additive valve can be overridden.

3. A method as claimed in claim 1 or claim 2, for controlling carbon monoxide emissions into the FCC unit.

4. A method as claimed in claim 1 or claim 2, for controlling oxidation levels and hence carbon monoxide emissions into the FCC unit.

5. A method as claimed in claim 1 or claim 2, for controlling SOₓ emissions into the FCC unit.

6. A method as claimed in claim 1 or claim 2, for controlling catalyst poisoning in the FCC unit.

7. A method as claimed in claim 1 or claim 2, for controlling the operating temperature in the FCC unit.

8. A method as claimed in claim 1 or claim 2, for controlling the production of bottoms product in the FCC unit.

9. A method as claimed in claim 1 or claim 2, for controlling octane levels of gasoline products in the FCC unit.

10. A method as claimed in claim 1 or claim 2, for controlling product yield in the FCC unit.

11. A method as claimed in claim 1 or claim 2, for controlling gas make in the FCC unit.

12. A method as claimed in claim 1 or claim 2, for controlling coke lay down in the FCC unit.

13. A method as claimed in claim 1 or claim 2, for controlling the distribution of products in the FCC unit.

## Patentansprüche

1. Verfahren zum Steuern des Einbringens eines Katalysator-Additivs für katalytisches Kracken im Fließbett in eine Einheit für katalytisches Kracken im Fließbett (FCC-Einheit), um eine gewünschte Menge des Krack-Katalysator-Additivs relativ zu einer gegebenen Menge an in der FCC-Einheit zirkulierender Katalysatormasse aufrechtzuerhalten und dadurch einen Katalysator-Leistungsparameter der FCC-Einheit zu steuern, wobei dieses Verfahren ferner umfaßt:
(1) Bestimmen einer gewünschten Menge an Krack-Katalysator-Additiv relativ zu einer gegebenen Menge an Katalysatormasse, die erforderlich ist, um den Katalysator-Leistungsparameter der FCC-Einheit auf einem gewünschten Wert zu halten;
(2) Bestimmen eines Bereichs von Krack-Katalysator-Additivkonzentrationen relativ zu einer gegebenen Menge an Katalysatormasse, die erforderlich ist, um den Katalysator-Leistungsparameter der FCC-Einheit auf dem gewünschten Wert zu halten;
(3) Bestimmen einer ungefähren Verbrauchsrate des Krack-Katalysator-Additivs über einen gegebenen Zeitraum;
(4) Bestimmen eines Basiszyklus-Zeitraums, der derart ist, daß der gegebene Zeitraum, über den die ungefähre verbrauchsrate bestimmt wird, aus mehreren Basiszyklus-Zeiträumen zusammengesetzt ist, wobei jeder Basiszyklus-Zeitraum ferner einen Zeitraum darstellt, während welchem eine erforderliche Maximalmenge an Krack-Katalysator-Additiv in die FCC-Einheit eingebracht wird;
(5) Bestimmen einer erforderlichen Maximalmenge des Krack-Katalysator-Additivs, die in die FCC-Einheit in einem gegebenen Basiszyklus-Zeitraum einzubringen ist;
(6) Einbringen einer erforderlichen Maximalmenge des Krack-Katalysator-Additivs in die FCC-Einheit in einem gegebenen Basiszeitraum und Einbringen der genannten erforderlichen Maximalmenge der Krack-Katalysator-Additive während des gegebenen Zeitraums ausreichend häufig, so daß: (a) das gewünschte Niveau an Krack-Katalysator-Additiv relativ zu einer gegebenen Menge an Katalysatormasse intermittierend auf periodischer Basis erzielt wird, und (b) jedes gegebene gewünschte Niveau des Krack-Katalysator-Additivs relativ zur Katalysatormasse im Bereich der Krack-Katalysator-Additiv-Konzentrationen bleibt, die zum Aufrechterhalten des Leistungsparameters der FCC-Einheit auf dem gewünschten Niveau erforderlich ist;
(7) Einbringen einer gegebenen Maximalmenge des Krack-Katalysator-Additivs in einem gegebenen Basiszyklus-Zeitraum bei einer Rate, die höher ist als die ungefähre Verbrauchsrate, und in einem Zeitraum, der nicht mehr als etwa zwei Drittel des Basiszyklus-Zeitraums beträgt; und
(8) Transferieren einer gegebenen erforderlichen Maximalmenge an Krack-Katalysator-Additiv von einem Krack-Katalysator-Vorratstrichter in die FCC-Einheit über ein automatisches Zugabe-Ventil, wobei das automatische Zugabeventil ein Zugabe-Ventil und ein Entleer-Ventil umfaßt, die in einer Flip-Flop-Weise arbeiten, so daß, wenn das Zugabe-Ventil offen ist (und das Entleer-Ventil geschlossen ist), eine fluidisierte Phase an Krack-Katalysator-Additiv der FCC-Einheit zugeführt wird, und so daß, wenn das Entleer-Ventil offen ist (und das Zugabe-Ventil geschlossen ist), der Trichterinhalt in einem bewegten fluidisierten Zustand gehalten wird, und wobei der Betrieb des automatischen Zugabe-Ventils auf einem Rückkopplungssignal basiert, das durch die Detektierung des genannten Katalysator-Leistungsparameters der FCC-Einheit erzeugt wird.

2. Verfahren nach Anspruch 1, bei welchem der genannte Betrieb des Additiv-Ventils einem Vorrang unterworfen werden kann.

3. Verfahren nach Anspruch 1 oder 2, zum Steuern von Kohlenmonoxidemissionen in der FCC-Einheit.

4. Verfahren nach Anspruch 1 oder 2, zum Steuern von Oxidationskonzentrationen und daher Kohlenmonoxidemissionen in der FCC-Einheit.

5. Verfahren nach Anspruch 1 oder 2, zum Steuern von SOₓ-Emissionen in der FCC-Einheit.

6. Verfahren nach Anspruch 1 oder 2, zum Steuern einer Katalysatorvergiftung in der FCC-Einheit.

7. Verfahren nach Anspruch 1 oder 2, zum Steuern der Betriebstemperatur in der FCC-Einheit.

8. Verfahren nach Anspruch 1 oder 2, zum Steuern der Produktion von Bodenprodukten in der FCC-Einheit.

9. Verfahren nach Anspruch 1 oder 2, zum Steuern von Oktankonzentrationen von Benzinprodukten in der FCC-Einheit.

10. Verfahren nach Anspruch 1 oder 2, zum Steuern der Produktausbeute in der FCC-Einheit.

11. Verfahren nach Anspruch 1 oder 2, zum Steuern der Gaserzeugung in der FCC-Einheit.

12. Verfahren nach Anspruch 1 oder 2, zum Steuern der Koksablagerung in der FCC-Einheit.

13. Verfahren nach Anspruch 1 oder 2, zum Steuern der Verteilung von Produkten in der FCC-Einheit.

## Revendications

1. Procédé d'introduction contrôlée d'un additif catalyseur de craquage catalytique fluide dans une unité de craquage catalytique (unité FCC) afin de maintenir une quantité souhaitée d'additif catalyseur de craquage par rapport à une quantité donnée de catalyseur en vrac circulant dans l'unité FCC et de contrôler ainsi un paramètre de performance du catalyseur de l'unité FCC, ledit procédé comprenant, en outre, les opérations suivantes:
(1) Déterminer une quantité souhaitée d'additif catalyseur de craquage, par rapport à une quantité donnée de catalyseur en vrac, qui est requise pour maintenir le paramètre de performance de catalyseur de l'unité FCC à un niveau souhaité.
(2) Déterminer une plage de concentration de l'additif catalyseur, par rapport à une quantité donnée de catalyseur en vrac, qui est requise pour maintenir le paramètre de performance de catalyseur de l'unité FCC au niveau souhaité.
(3) Déterminer un taux de consommation approximatif de l'additif catalyseur craquage pendant une période de temps donnée.
(4) Déterminer une période de temps du cycle de base qui est telle que la période de temps donnée pendant laquelle le taux de consommation approximatif est déterminé, est constituée de plusieurs périodes de temps du cycle de base et que chaque période de temps du cycle de base constitue en outre une période de temps pendant laquelle une quantité maximale d'additif catalyseur de craquage est introduite dans l'unité FCC.
(5) Déterminer une quantité maximale d'additif catalyseur de craquage à introduire dans l'unité FCC pendant une période de temps du cycle de base.
(6) Introduire une quantité maximale requise d'additif catalyseur de craquage dans l'unité FCC pendant une période de temps de base donnée et introduire lesdites quantités maximales d'additif catalyseur de craquage avec une fréquence suffisante pendant la période de temps données pour que: (a) le niveau souhaité d'additif catalyseur de craquage, par rapport à une quantité donnée de catalyseur en vrac, soit obtenu par intermittence sur une base périodique et (b) que tout niveau souhaité donné d'additif catalyseur de craquage, par rapport au catalyseur en vrac, reste dans la plage des concentrations de l'additif catalyseur de craquage requise pour maintenir le paramètre de performance de l'unité FCC au niveau souhaité.
(7) Introduire toute quantité requise maximale donnée d'additif catalyseur de craquage pendant toute période de temps du cycle de base donné avec un débit supérieur au taux de consommation approximatif et pendant une période de temps qui ne dépasse pas environ les 2/3 de la période du temps du cycle de base; et
(8) Transférer une quantité requise maximale donnée d'additif catalyseur de craquage provenant d'une trémie de réserve de catalyseur de craquage à l'unité FCC par une vanne d'alimentation automatique, ladite vanne d'alimentation automatique comprenant une vanne d'alimentation et une vanne de purge, qui fonctionnent de manière alternée de façon à ce que, lorsque la vanne d'alimentation est ouverte (et que la vanne de purge est fermée), une phase fluidisée d'additif catalyseur de craquage est amenée à l'unité FCC et telle que quand la vanne de purge est ouverte (et que la vanne d'alimentation est fermée), le stock contenu dans la trémie est maintenu à l'état fluidisé par agitation et que le fonctionnement de la vanne d'alimentation automatique est basé sur un signal de rétroaction qui est fourni par détection dudit paramètre de performance du catalyseur de l'unité FCC.

2. Procédé selon la revendication 1, dans lequel ledit fonctionnement de la vanne d'alimentation peut être interrompu.

3. Procédé selon la revendication 1 ou la revendication 2 pour contrôler les émissions de monoxyde de carbone pénétrant dans l'unité FCC.

4. Procédé selon la revendication 1 ou la revendication 2 pour contrôler les niveaux d'oxydation et donc les émissions de monoxyde de carbone pénétrant dans l'unité FCC.

5. Procédé selon la revendication 1 ou la revendication 2 pour contrôler les émissions de SOₓ pénétrant dans l'unité FCC.

6. Procédé selon la revendication 1 ou la revendication 2 pour contrôler les poisons de catalyseur dans l'unité FCC.

7. Procédé selon la revendication 1 ou la revendication 2 pour contrôler la température de fonctionnement de l'unité FCC.

8. Procédé selon la revendication 1 ou la revendication 2 pour contrôler la production de produits de pied dans l'unité FCC.

9. Procédé selon la revendication 1 ou la revendication 2 pour contrôler les teneurs en octane des essences produites dans l'unité FCC.

10. Procédé selon la revendication 1 ou la revendication 2 pour contrôler la quantité produite dans l'unité FCC.

11. Procédé selon la revendication 1 ou la revendication 2 pour contrôler la production de gaz dans l'unité FCC.

12. Procédé selon la revendication 1 ou la revendication 2 pour contrôler le coke déposé dans l'unité FCC.

13. Procédé selon la revendication 1 ou la revendication 2 pour contrôler la répartition des produits dans l'unité FCC.
